# EUROPÄISCHE PATENTSCHRIFT

(11) **EP 1 184 753 B1**
(45) Veröffentlichungstag und Bekanntmachung des Hinweises auf die Patenterteilung: **04.08.2004**
(21) Anmeldenummer: 01120133.2
(22) Anmeldetag: 22.08.2001
(51) Int. Cl.: G05B 9/02, H02P 7/01, H02P 7/00

(54) **Steuerschaltung für einen Antrieb**
Circuit controlling a motor
Circuit pour commander un moteur

(30) Priorität: 23.08.2000 DE 20014615 U
(43) Veröffentlichungstag der Anmeldung: 06.03.2002
(73) Patentinhaber: HONEYWELL AG, 63067 Offenbach am Main (DE)
(72) Erfinder: Winter, Stephen, 63500 Seligenstadt (DE); Koch, Danny, 78549 Spaichingen (DE)
(74) Vertreter: KEIL & SCHAAFHAUSEN

(56) Entgegenhaltungen:
- EP-A- 0 779 200
- EP-A- 0 822 315

## Beschreibung

Die Erfindung betrifft eine Steuerschaltung für einen Antrieb gemäß dem Oberbegriff des Anspruchs 1.

Steuerschaltungen für Antriebe, insbesondere für Synchron-Wechselstrommotoren, sind entweder auf einen sogenannten Zwei-Punkt-Betrieb oder auf einen sogenannten Drei-Punkt-Betrieb ausgelegt. Im sogenannten Zwei-Punkt-Betrieb ist entweder ein Rechtslauf oder ein Linkslauf des Antriebs möglich, während beim sogenannten Drei-Punkt-Betrieb neben dem Rechtslauf und Linkslauf auch ein Stillstand des Antriebs möglich ist. Aus der EP 0 822 315 A2 ist eine Schaltungsanordnung zur Steuerung von elektromotorischen Antrieben in einem Drei-Punkt-Betrieb bekannt, wobei der Antrieb eine Motorwicklung für den Rechtslauf und eine Motorwicklung für den Linkslauf aufweist, an deren Zuleitungen alternativ eine Versorgungsspannung anlegbar ist. In den Zuleitungen zu den Motorwicklungen ist je ein Schalter zum Anschalten jeder Zuleitung zu den Motorwicklungen vorgesehen. Eine Steuereinheit der Schaltanordnung erkennt über eine Signalanpassung, welcher der beiden Zuleitungen mit der Phase verbunden ist. Durch entsprechendes Anschalten der Schalter zur Verbindung der jeweilgen Zuleitung mit der entsprechenden Motorwicktung wird ein Rechts- bzw. Linkslauf oder ein Stillstand des Motors realisiert. Wenn beide Zuleiter mit der Phase verbunden sind, wird die Schaltung in einen Programmiermodus zum Einstellen einer Endposition versetzt. In der EP 0 779 200 A2 ist ferner ein Fail-Safe-System zur automatischen Beendung eines fehlerhaften Zustands eines Mikroprozessors durch Überwachung von Pulsfrequenzen beschrieben. Es gibt jedoch bislang keine Steuerschaltungen für Antriebe; die sowohl einen Zwei-Punkt-Betrieb als auch einen Drei-Punkt-Betrieb des Antriebs ermöglichen.

Hiervon ausgehend liegt der Erfindung das Problem zu Grunde, eine neuartige Steuerschaltung für einen Antrieb zu schaffen, die sowohl einen Zwei-Punkt-Betrieb als auch einen Drei-Punkt-Betrieb des Antriebs ermöglicht.

Dies gelingt mit der im Anspruch 1 beschriebenen Steuerschaltung. Die erfindungsgemäße Steuerschaltung macht keine Unterscheidung in der Verdrahtung des Antriebs und keine Manipulationen am Antrieb zur Ermöglichung eines Zwei-Punkt-Betrieb oder Drei-Punkt-Betriebs nötig. Die erfindungsgemäße Lösung ist demnach sehr kostengünstig.

Bevorzugte Weiterbildungen der Erfindung ergeben sich aus den Unteransprüchen und der nachfolgenden Beschreibung. Ein bevorzugtes Ausführungsbeispiel wird nachfolgend anhand der Zeichnung beschrieben. In der Zeichnung zeigt:
- Fig. 1:: ein schematisiertes Blockschaltbild einer erfindungsgemäßen Steuerschaltung nach einem Ausführungsbeispiel der Erfindung, und
- Fig. 2:: eine detaillierte Ausführung der Steuerschaltung gemäß Fig. 1.

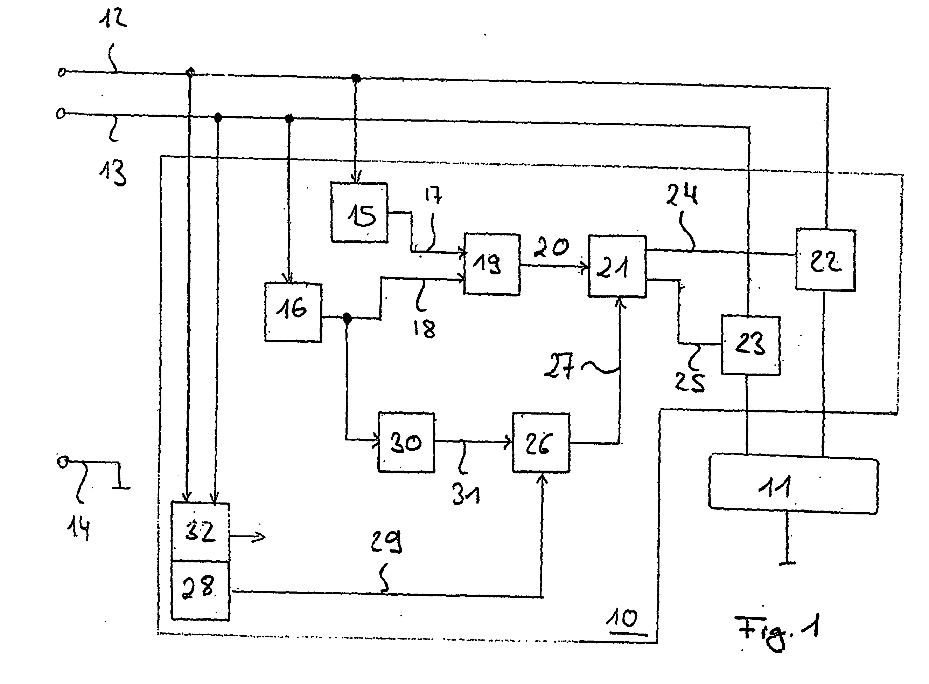

Fig. 1 zeigt ein schematisiertes Blockschaltbild einer erfindungsgemäßen Steuerschaltung 10. Für einen als Synchron-Wechselstrommotor ausgebildeten Antrieb 11. Gemäß Fig. 1 erfolgt die Ansteuerung des Antriebs 11 über Steuerleitungen 12, 13, wobei das Potential der an den Steuerleitungen 12, 13 anliegenden Signale auf eine Masseleitung 14 bezogen ist.

Gemäß Fig. 1 ist jeder Steuerleitung 12, 13 jeweils eine Wandlereinrichtung 15, 16 zugeordnet. Die an den Steuerleitungen 12, 13 anliegenden Wechselstrom-Signale werden der korrespondierenden Wandlereinrichtung 15, 16 zugeführt, die eine Wechselspannungs/Gleichspannungs-Umwandlung vornehmen.

Ausganssignale 17, 18 der Wandlereinrichtungen 15, 16 sind einer Auswerteeinrichtung 19 zuführbar In der Auswerteeinrichtung 19 ist eine Wahrheitstabelle abgelegt, in der den Signalzuständen der Ausgangssignale 17, 18 eine Drehrichtung des Antriebs 11 oder ein Stillstand des Antriebs 11 zugeordnet sind. Ein Ausgangssignal 20 der Auswerteeinrichtung 19 enthält demnach Informationen über den gewünschten Betriebszustand - Linkslauf oder Rechtslauf oder Stillstand - des Antriebs 11.

Gemäß Fig. 1 wirkt das Ausgangssignal 20 der Auswerteeinrichtung 19 unter Zwischenschaltung einer Ansteuereinrichtung 21 auf den Steuerleitungen 12, 13 zugeordnete Schalter 22, 23 ein. Abhängig vom Ausgangssignal 20 der Auswerteeinrichtung 19 erzeugt demnach die Ansteuereinrichtung 21 Steuersignale 24, 25 für die Schalter 22, 23.

Gemäß Fig. 1 wird der Ansteuereinrichtung 21 neben dem Ausgangssignal 20 der Auswerteeinrichtung 19 ein weiteres Eingangssignal zugeführt. Bei diesem weiteren Eingangssignal handelt es sich um ein Ausgangssignal einer Sicherheitseinrichtung 26, also um ein Sicherheitssignal 27. Dient z.B. der Antrieb 11 der Ansteuerung einer Klappe, so wird über die Sicherheitseinrichtung 26 gewährleistet, daß nach einer vorbestimmten Zeitdauer - sogenannte Sicherheitszeit -, die üblicherweise zum kompletten Öffnen oder zum kompletten Schließen der angesteuerten Klappe ausreichend ist, der Antrieb 11 abgeschaltet wird. Hierdurch werden Beschädigungen des Antriebs durch Überhitzung oder dergl. vermieden.

Zur Gewährleistung dieser Sicherheitsfunktion über die Sicherheitseinrichtung 26 sind die an den Steuerleitungen 12, 13 anliegenden Signale neben den Wandlereinrichtungen 15, 16 einer Takteinrichtung 28 zuführbar. Ein Ausgangssignal 29 der Takteinrichtung 28, welches der Sicherheitseinrichtung 26 als Eingangssignal zuführbar ist, stellt eine Zeitbasis bereit, wobei die Sicherheitseinrichtung 26 im Ausgangssignal 29 der Takteinrichtung 28 enthaltene Impulse zählt und so die vom Anwendungsfall abhängige Sicherheitszeit überwacht. Bei Überschreiten dieser Sicherheitszeit gibt das von der Sicherheitseinrichtung erzeugte Sicherheitssignal der Ansteuereinrichtung 21 den Befehl, den Antrieb 11 still zu setzen, um so Beschädigungen desselben zu vermeiden.

Im Zusammenhang mit der von der Sicherheitseinrichtung 26 gewährleisteten Sicherheitsfunktion ist von Bedeutung, daß eine Rücksetzeinrichtung 30 vorhanden ist. Der Rücksetzeinrichtung 30 wird ein Ausgangssignal 18 einer der beiden Wandlereinrichtungen 16 zugeführt. Ergibt sich in dem der Rücksetzeinrichtung 30 zugeführten Signal 18 eine Änderung, so setzt das von der Rücksetzeinrichtung 30 erzeugte Rücksetzsignal 31 die Sicherheitseinrichtung 26 zurück. Die Sicherheitseinrichtung 26 beginnt von Neuem mit der Überwachung der von der konkreten Anwendung abhängigen Sicherheitszeit für den Antrieb 11.

Fig. 1 kann weiterhin entnommen werden, daß der Takteinrichtung 28 eine Energieversorgungseinrichtung 32 zugeordnet ist. Die Energieversorgungseinrichtung 32 versorgt die gesamte Steuerschaltung 10 mit Spannung.

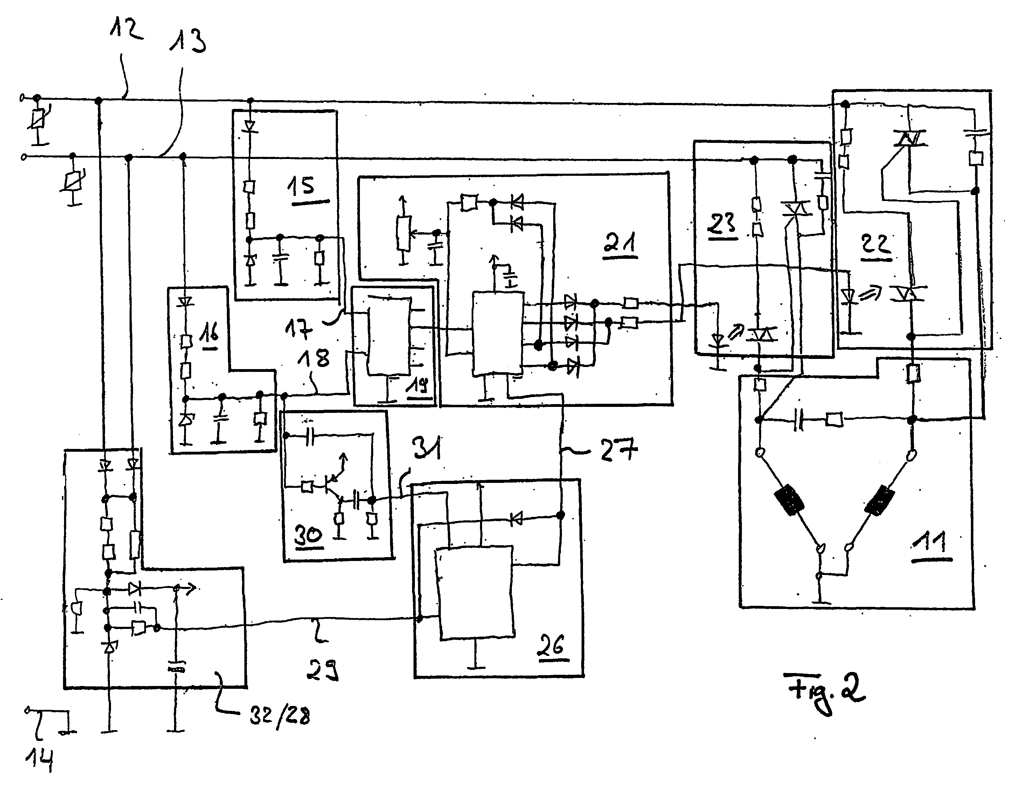

Abschließend soll noch auf Fig. 2 verwiesen werden, die eine konkrete Ausführungsform der im Zusammenhang mit Fig. 1 beschriebenen Einzelelemente der erfindungsgemäßen Steuerschaltung 10 zeigt. Die Funktion der in Fig. 2 gezeigten Widerstände, Dioden, Kondensatoren und weiteren elektronischen Bauelemente ist dem hier angesprochenen Fachmann geläufig, so daß diese Bauelemente keiner weiteren Erläuterung bedürfen. Fig. 2 stellt lediglich eine bevorzugte nähere Ausgestaltung des in Zusammenhang mit Fig. 1 beschriebenen erfindungsgemäßen Prinzips dar.

Die oben beschriebene erfindungsgemäße Sicherheitseinrichtung ist sowohl bei Zwei-Punktbetrieb als auch bei Drei-Punkt-Betrieb des Antriebs 11 einsetzbar.

### Bezugszeichenliste

- 10: Steuerschaltung
- 11: Antrieb
- 12: Steuerleitung
- 13: Steuerleitung
- 14: Masseleitung
- 15: Wandlereinrichtung
- 16: Wandlereinrichtung
- 17: Ausgangssignal
- 18: Ausgangssignal
- 19: Auswerteeinrichtung
- 20: Ausgangssignal
- 21: Ansteuereinrichtung
- 22: Schalter
- 23: Schalter
- 24: Steuersignal
- 25: Steuersignal
- 26: Sicherheitseinrichtung
- 27: Sicherheitssignal
- 28: Takteinrichtung
- 29: Ausgangssignal
- 30: Rücksetzeinrichtung
- 31: Rücksetzsignal
- 32: Energieversorgungseinrichtung

## Patentansprüche

1. Steuerschaltung für einen Antrieb, insbesondere für einen Synchron-Wechselstrommotor, bei der die Steuerung des Antriebs (11) über Steuerleitungen (12, 13) erfolgt und jeder Steuerleitung (12, 13) jeweils eine Wandlereinrichtung (15, 16) zugeordnet ist, wobei Signale der Steuerleitungen (12, 13) der korrespondierenden Wandlereinrichtung (15, 16) und Ausgangssignale (17, 18) der Wandlereinrichtung (15, 16) einer Auswerteeinrichtung (19) zugeführt werden, und wobei der Antrieb (11) in Abhängigkeit eines Ausgangssignals (20) der Auswerteeinrichtung (19) gesteuert wird, **dadurch gekennzeichnet, daß** in der Auswerteeinrichtung (19) eine Wahrheitstabelle abgelegt ist, in der den Signalzuständen der Ausgangssignale (17, 18) eine Drehrichtung oder ein Stillstand des Antriebs (11) zum Ermöglichen sowohl eines Zwei-Punkt-Betriebs als auch eines Drei-Punkt-Betriebs zugeordnet sind.

2. Steuerschaltung nach Anspruch 1, **dadurch gekennzeichnet, daß** die Auswerteeinrichtung (19) auf den Steuerleitungen (12, 13) zugeordnete Schalter (22, 23) einwirkt, wobei zwischen die Auswerteeinrichtung (19) und die Schalter (22, 23) eine Ansteuereinrichtung (21) geschaltet ist, die aus dem Ausgangssignal (20) der Auswerteeinrichtung (19) Steuersignale (24, 25) für die Schalter (22, 34) erzeugt.

3. Steuerschaltung nach Anspruch 2, **dadurch gekennzeichnet, daß** die Signale der Steuerleitungen (12, 13) neben den Wandlereinrichtungen (15, 16) einer Takteinrichtung (28) zugeführt werden, wobei das Ausgangssignal (29) der Takteinrichtung (28) einer Sicherheitseinrichtung (26) zugeführt wird, deren Sicherheitssignal (27) neben dem Ausgangssignal (20) der Auswerteeinrichtung (19) der Ansteuereinrichtung (21) als Eingangssignal zugeführt wird.

4. Steuerschaltung nach Anspruch 3, **dadurch gekennzeichnet, daß** die Sicherheitseinrichtung (26) zur Überwachung einer Sicherheitszeit im Ausgangssignal (29) der Takteinrichtung (28) enthaltene Impulse zählt und deren Sicherheitssignal (27) bei Überschreitung der Sicherheitszeit der Ansteuereinheit (21) den Befehl zum Stillsetzen des Antriebs (11) gibt.

5. Steuerschaltung nach einem oder mehreren der Ansprüche 3 oder 4, **dadurch gekennzeichnet, daß** der Sicherheitseinrichtung (26) neben dem Ausgangssignal (29) der Takteinrichtung (28) ein Rücksetzsignal (31) einer Rücksetzeinrichtung (30) als Eingangssignal zugeführt wird, wobei der Rücksetzeinrichtung (30) ein Ausgangssignal (18) einer der Wandlereinrichtungen (16) als Eingangssignal zugeführt wird.

## Claims

1. A control circuit for a drive, in particular for a synchronous alternating current motor, in which the control of the drive (11) takes place by control lines (12, 13) and a transducer device (15, 16) is associated with each control line (12, 13), wherein signals of the control lines (12, 13) are supplied to the corresponding transducer device (15, 16) and output signals (17, 18) of the transducer device (15, 16) are supplied to an evaluation device (19),
**characterised in that** deposited in the evaluation device (19) is a truth table, in which a direction of rotation or a stoppage of the drive (11) are assigned to the signal states of the output signals (17, 18) to enable a two-point operation and also a three-point operation.

2. A control circuit according to Claim 1,
**characterised in that** the evaluation device (19) acts on switches (22, 23) associated with the control lines (12, 13), a control device (21) being switched between the evaluation device (19) and the switches (22, 23), which control device generates control signals (24, 25) for the switches (22, 34) from the output signal (20) of the evaluation device (19).

3. A control circuit according to Claim 2,
**characterised in that** the signals of the control lines (12, 13) are supplied to a timing device (28), as well as to the transducer devices (15, 16), the output signal (29) of the timing device (28) being supplied to a safety device (26), the safety signal (27) of which is supplied, in addition to the output signal (20) of the evaluation device (19), to the control device (21) as an input signal.

4. A control circuit according to Claim 3,
**characterised in that** to monitor a safety period the safety circuit (26) counts pulses contained in the output signal (29) of the timing device (28) and whose safety signal (27) gives the command to stop the drive (11) if the safety period of the control device (21) is exceeded.

5. A control circuit according to one or more of Claims 3 or 4,
**characterised in that** a resetting signal (31) of a resetting device (30) is supplied as an input signal to the safety device (26), apart from the output signal (29) of the timing device (28), an output signal (18) of one of the transducer devices (16) being supplied as an input signal to the resetting device (30).

## Revendications

1. Circuit de commande pour un mécanisme d'entraînement, notamment pour un moteur synchrone à courant alternatif, dans lequel la commande du mécanisme d'entraînement (11) se fait au moyen de lignes de commande (12, 13) et à chaque ligne de commande (12, 13) est associée un dispositif convertisseur (15, 16) d'un dispositif d'exploitation (19), les signaux des lignes de commande (12, 13) étant transmis au dispositif convertisseur correspondant (15, 16) et les signaux de sortie (17, 18) du dispositif convertisseur à un dispositif d'exploitation (19), et le mécanisme d'entraînement (11) étant commandé en fonction d'un signal de sortie (20) du dispositif d'exploitation (19), **caractérisé en ce que** un tableau de vérité est mémorisé dans le dispositif d'exploitation (19) dans lequel un état de signal est associé à une direction de rotation ou un état d'arrêt du mécanisme d'entraînement (11) pour permettre aussi bien un régime à deux échelons qu'un régime à trois échelons.

2. Circuit de commande selon la revendication 1, **caractérisé en ce que** le dispositif d'exploitation (19) agit sur les commutateurs (22, 23) attribués aux lignes de commande (12, 13), un dispositif de commande (21) étant interposé entre le dispositif d'exploitation (19) et les commutateurs (22, 23) et qui génère les signaux de commande (24, 25) pour les commutateurs (22, 23) à partir du signal de sortie (20) du dispositif d'exploitation (19).

3. Circuit de commande selon la revendication 2, **caractérisé en ce que** les signaux des lignes de commande (12, 13) sont non seulement transmis aux dispositifs convertisseurs mais également à un dispositif d'horloge (28), le signal de sortie (29) du dispositif d'horloge (28) étant transmis à un dispositif de sécurité (26) dont le signal de sécurité (27) est transmis en plus du signal de sortie (20) du dispositif d'exploitation (19) du dispositif.

4. Circuit de commande selon la revendication 3, **caractérisé en ce que** le dispositif de sécurité (26) compte les impulsions contenues de la signal de sortie (29) du dispositif d'horloge (28) pour contrôler une durée de sécurité, et dont le signal de sécurité (27) donne l'ordre à l'unité de commande (21) de mettre à l'arrêt le mécanisme d'entraînement en cas de dépassement de la durée de sécurité.

5. Circuit de commande selon l'une ou plusieurs des revendications 3 ou 4, **caractérisé en ce que** le dispositif de sécurité (26) reçoit comme signal d'entrée outre le signal de sortie (29) du dispositif d'horloge (28) également un signal de réinitialisation (31) d'un dispositif de réinitialisation (30), le dispositif de réinitialisation (30) recevant comme signal d'entrée un signal de sortie provenant du dispositif convertisseur (16).
